# FASCICULE DE BREVET EUROPEEN

(11) **EP 0 493 201 B1**
(45) Date de publication et mention de la délivrance du brevet: **05.07.1995**
(21) Numéro de dépôt: 91403443.4
(22) Date de dépôt: 18.12.1991
(51) Int. Cl.: G21C 3/334

(54) **Squelette démontable d'un assemblage de combustible nucléaire**
Zerlegbares Skelett eines Kernbrennstabbündels
Nuclear fuel assembly skeleton capable of being disassembled

(30) Priorité: 21.12.1990 FR 9016121
(43) Date de publication de la demande: 01.07.1992
(73) Titulaire: FRAMATOME, 92400 Courbevoie (FR); COMPAGNIE GENERALE DES MATIERES NUCLEAIRES (COGEMA), 78141 Vélizy-Villacoublay (FR)
(72) Inventeur: Verdier, Michel, F-69100 Villeurbanne (FR)
(74) Mandataire: Fort, Jacques

(56) Documents cités:
- EP-A- 0 076 748
- EP-A- 0 360 664
- DE-A- 2 520 345
- FR-A- 2 531 257

## Description

L'invention concerne les assemblages combustibles nucléaires et, plus particulièrement, les assemblages combustibles comprenant un squelette constituant la structure de l'assemblage et maintenant un faisceau de crayons de combustible aux noeuds d'un réseau régulier. De tels assemblages sont notamment utilisés dans les réacteurs refroidis et modérés par de l'eau légère. Le squelette comprend alors deux embouts reliés par des tubes guides qui portent des grilles réparties le long des tubes guides et retenant les cravons de combustible aux noeuds du réseau (EP-A-0 076 748 et EP-A-0 360 664).

Les tubes guides sont prévus pour recevoir des crayons appartenant à des grappes absorbantes de commande de la réactivité et/ou à des grappes de variation du spectre d'énergie des neutrons. Pour atténuer le choc provoqué par la chute des grappes en cas d'arrêt d'urgence du réacteur, on fait souvent jouer aux tubes guides une fonction d'amortisseur hydraulique en les munissant d'un bouchon inférieur perçé d'un passage étroit.

En général les embouts sont constitués en un matériau ayant des propriétés mécaniques élevées, tel que l'acier inoxydable ou un des alliages connus sous le nom d'Inconel, tandis que les tubes guides sont en un alliage à base de zirconium. En conséquence il est difficile de fixer directement par soudage les tubes aux embouts. De plus, il est souhaitable que la fixation des tubes guides à un au moins des embouts soit aisément démontable et remontable, afin d'autoriser le remplacement de crayons défectueux.

On connaît par ailleurs (DE-A-2 520 345) une broche de fixation de crayon combustible de réacteur nucléaire, ayant une partie haute fixée au crayon et une partie basse en saillie qui présente un épaulement dirigé vers le bas, d'appui, et qui est fractionnée en plusieurs doigts élastiques ayant chacun un épaulement d'accrochage dirigé vers le haut. Une telle broche est évidemment démunie d'un trou de passage de réfrigérant, puisqu'elle doit fermer le crayon de façon étanche.

L'invention vise à fournir un squelette d'assemblage du genre ci-dessus défini dont l'embout inférieur est rapidement démontable et remontable et dont les moyens de liaison sont réalisables de façon relativement simple et à un coût acceptable.

Dans ce but l'invention propose notamment un squelette suivant la revendication 1.

La partie terminale de la broche, au-delà de l'épaulement dirigé vers le haut, a avantageusement une forme évasée de façon qu'une poussée verticale exercée sur le tube guide provoque le rapprochement des doigts élastiques et permettent l'insertion de la broche jusqu'à encliquetage des doigts. Le passage dans l'embout est constitué par un simple usinage cylindrique, pouvant s'ouvrir vers le haut par un chanfrein pour faciliter l'insertion de la broche.

De façon que les doigts aient et conservent sous irradiation une élasticité suffisante, la broche est avantageusement fabriquée en un matériau ayant des propriétés mécaniques éprouvées, tel que l'Inconel 718. La broche peut alors être fixée au tube guide, généralement en alliage à base de zirconium, par un sertissage circulaire du tube guide dans une gorge de la broche.

Pour éviter le risque de dégagement intempestif des broches, par exemple en cas de réduction de leur élasticité, les moyens démontables, mis en place après encliquetage interdisent le rapprochement des doigts. Ces moyens peuvent notamment être constitués par un jonc de verrouillage logé dans une gorge de la broche et dont les extrémités s'insèrent dans les fentes séparant les doigts.

La liaison entre les tubes guides et l'embout supérieur peut être réalisé par l'une quelconque des dispositions bien connues à l'heure actuelle. On peut notamment utiliser une liaison par des douilles vissées, du genre décrit dans le document FR-A-2 465 916, ou une liaison par sertissage de la partie supérieure du tube guide dans un chambrage de l'embout supérieur et blocage par une douille insérée à force.

L'invention sera mieux comprise à la lecture de la description qui suit d'un mode particulier de réalisation de l'invention et de variantes, données à titre d'exemples non limitatifs. La description se réfère aux dessins qui l'accompagnent, dans lesquels :
- la figure 1 est une vue en élévation et en coupe partielle montrant les liaisons d'un tube guide avec les embouts d'un squelette d'assemblage ;
- La figure 2 est une vue de dessous de la figure 1 ;
- La figure 3 montre la forme prise par les doigts d'encliquetage des moyens de fixation lors de leur insertion dans l'embout inférieur ;
- La figure 4, similaire à une fraction de la figure 1, montre une variante de réalisation ;
- La figure 5 est une vue de dessous de la figure 4 ;
- La figure 6 montre schématiquement une fraction d'un outil de démontage utilisable pour chasser les tubes guides de l'embout inférieur ;
- La figure 7, similaire à une fraction de la figure 1, montre une autre variante encore.

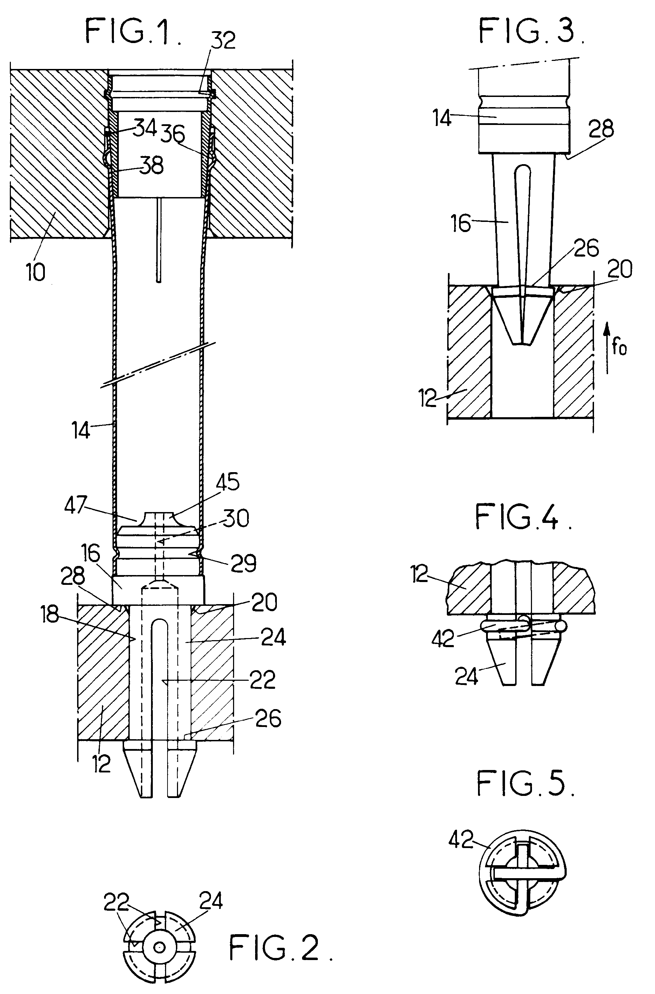

La fraction de squelette montrée en figure 1 peut appartenir à un squelette ayant la même constitution générale que celle des assemblages combustibles pour réacteurs à eau sous pression connus, c'est-à-dire ayant un embout supérieur 10 et un embout inférieur 12 percés d'ouvertures de passage de réfrigérant et reliés par des tubes guides 14 qui portent des grilles non représentées. Une telle constitution de squelette ne sera pas décrite, car on peut se reporter à de nombreux documents antérieurs, par exemple au document EP-A- 0 187 578 pour trouver une description d'assemblage susceptible d'être modifié pour mettre en oeuvre l'invention.

Chacun des tubes guides 14 du genre montré en figure 1 est relié à l'embout inférieur par des moyens suivant un mode particulier de réalisation de l'invention, permettant un démontage aisé et cependant de constitution simple. La partie de ces moyens appartenant à l'embout 12 se limitent à un alésage 18 comportant avantageusement un chanfrein d'entrée 20 destiné à faciliter l'insertion de l'embout sur les moyens portés par les tubes guides 14. La partie des moyens portée par le tube guide est constituée par une simple broche 16 dont la partie haute est fixée dans le tube 14 et dont la partie basse est fractionnée par des fentes 22 en plusieurs doigts 24 (au nombre de quatre, séparés par deux fentes en croix dans le cas des figures 1 et 2). Ces doigts sont suffisament minces pour être élastiques. La partie basse se termine par une zone évasée constituant un cône facilitant l'entrée de la broche dans l'alésage 18.

Les doigts 24 comportent un épaulement 26 situé à la base de la zone évasée, placé à une distance d'un épaulement 28 séparant les parties hautes et basses qui est égale à l'épaisseur de l'embout 12. La saillie de l'épaulement 26 et la largeur des fentes 22 sont proportionnées de façon qu'à l'état détendu les doigts soient emprisonnés dans l'embout inférieur, mais que les épaulements 26 puissent passer dans l'alésage 18 en cas de flexion des doigts vers l'intérieur.

Les tubes guides 14 sont généralement en alliage à base de zirconium, tel que l'un de ceux connus sous le nom de "zircaloy" dont les propriétés mécaniques, surtout après irradiation, sont insuffisantes pour constituer la broche 16. Celle-ci, ainsi généralement que les embouts, sera constituée en acier inoxydable ou en un des alliages connus sous le nom d'Inconel, qu'il est difficile de souder aux alliages à base de zirconium.

Pour cette raison, les broches 16 seront généralement fixées aux tubes guides 14 par sertissage. Dans le cas illustré sur la figure 1, chaque tube guide 14 est en appui sur un épaulement de la partie haute de la broche associée et est fixé par sertissage dans une gorge 29 de la partie haute, suivant une technique bien connue et maîtrisée.

Pour permettre un écoulement étranglé de réfrigérant à travers la broche, donnant un amortissement hydraulique en cas de chute d'un crayon dans le tube guide 14, un trou de faible diamètre 30 est généralement percé dans l'axe de la partie haute de la broche 16 et débouche entre les doigts 24. Une partie saillante 45 peut être prévue pour créer un volume mort 47 susceptible de recevoir de petits débris et éviter le bouchage du trou 30.

Les tubes guides peuvent être fixés à l'embout supérieur 10 par des moyens de constitution connus. Lorsqu'en particulier on souhaite pouvoir démonter et remonter cet embout de façon simple, par exemple pour remplacer des crayons, on peut utiliser des douilles vissées, munies d'une jupe mince déformable dans des encoches de l'embout afin de les bloquer en rotation (FR-A-2 465 916).

Dans le mode de réalisation montré en figure 1, la liaison entre chaque tube guide 14 et l'embout supérieur 10 est réalisée par sertissage. Pour cela le passage de réception d'un tube guide dans l'embout présente successivement, de haut en bas, une partie cylindrique dans laquelle est ménagée une gorge de sertissage 32, une partie légèrement tronconique séparée de la partie cylindrique par un épaulement 34 et présentant une gorge de sertissage 36 et enfin une partie basse cylindrique. L'opération de fixation est la suivante : le tube guide est introduit dans l'embout qui est positionné axialement. Il est serti par déformation dans la gorge 36. Le risque de séparation est évité en introduisant à force une douille 38 présentant une jupe mince supérieure qui est déformée dans la gorge 32.

Comme le montre la figure 3, la mise en place de l'embout inférieur 12 sur les tubes guides 14, avantageusement maintenus dans leur position nominale par des peignes en croix, s'effectue par simple déplacement de l'embout 12 dans la direction indiqué par la flèche f₀. La pression du chanfrein 20 sur l'extrémité évasée de la broche 16 fait fléchir les doigts. Lorsque l'embout 12 arrive contre l'épaulement 28, les doigts 24 ont juste dépassé l'embout et s'écartent. Les épaulements 26 s'encliquettent sur l'embout.

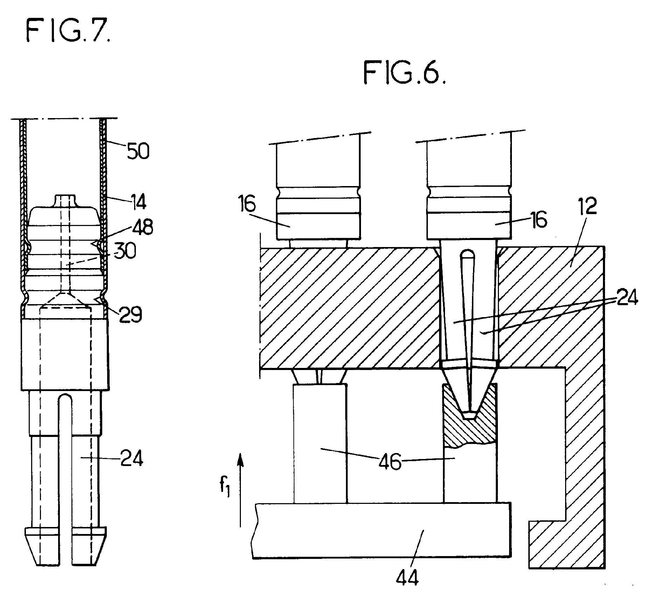

La variante de réalisation montrée en figures 4 et 5 se différencie de celle qui vient d'être décrite par la présence de moyens aisément mis en place ou enlevés, interdisant le rapprochement mutuel des doigts lorsqu'ils sont en place.

Les moyens montrés à titre d'exemple sont constitués par un jonc 42 ayant un développement angulaire de 270° et terminés par des portions rectilignes qui s'insèrent dans les fentes séparant les doigts 24. Le jonc est retenu dans une gorge de la broche et interdit aux doigts de se rapprocher. Le montage s'effectue comme dans le cas des figures 1 à 3. Le jonc est mis en place dans la gorge, située au dessous de l'embout 12, une fois les doigts encliquetés.

Le démontage de l'embout inférieur peut s'effectuer de façon très simple. Eventuellement après enlèvement des joncs 42, toutes les broches sont simultanément refoulées à l'aide d'un outil unique 44 muni de pions 46 présentant une surface d'appui conique. Comme le montre la figure 6, le déplacement de l'outil dans le sens de la flèche f₁ provoque successivement le rapprochement des doigts 24, puis le relèvement des tubes guides. Il serait tout aussi bien possible de faire reposer les broches sur l'outil 44, puis de tirer vers le bas l'embout 12. Cet outil peut aussi être utilisé pour le montage et éviter des frictions trop importantes des doigts dans l'embout.

Dans une autre variante encore de réalisation, montrée en figure 7 (où les éléments correspondant à ceux de la figure 1 sont désignés par le même numéro de référence), les doigts 24 ont une épaisseur radiale qui décroit vers l'extrémité, de façon à obtimiser les contraintes dans les doigts 24 et leur rigidité. Ce résultat peut être obtenu de façon simple en découpant les doigts dans une ébauche ayant deux diamètres successifs, ou davantage.

Dans le mode de réalisation de la figure 7, la partie haute de la broche comporte une seconde gorge circonférentielle 48. Cette gorge peut être utilisée pour effectuer un second sertissage du tube guide 14. Mais elle permet également, en la prévoyant sur une zone de diamètre réduit de la partie haute, de sertir une cartouche tubulaire 50, de longueur nettement inférieure à celle du tube guide. Cette cartouche, qui a généralement quelques dixièmes de millimètres d'épaisseur, a pour fonction d'étrangler le trajet de fuite vers le haut en cas de chute d'un crayon dans le tube guide et donc joue un rôle d'amortisseur hydraulique. La cartouche 50, montée à frottement doux dans le tube guide, peut prendre appui sur un épaulement de la partie haute et être sertie dans la gorge 48, avant mise en place et sertissage du tube guide.

Quel que soit le mode de réalisation adopté, la liaison entre les tubes guides 14 et l'embout inférieur 12 est réalisée par des moyens simples, comportant une seule pièce en plus des tubes guides et de l'embout. Le coût de fabrication et de contrôle est réduit. Le temps de montage en usine est réduit, ainsi que les temps d'intervention pour les démontages et remontages ultérieurs éventuels.

## Revendications

1. Squelette d'assemblage combustible nucléaire comprenant deux embouts (10,12) reliés par des tubes guides (14), caractérisé en ce que les moyens de liaison comprennent :
- une broche (16) percée d'un trou étranglé (30) de passage de réfrigérant, ayant une partie haute fixée dans le tube guide et une partie basse en saillie, qui présente un épaulement (28), dirigé vers le bas, d'appui sur l'embout inférieur, qui traverse un passage ménagé dans l'embout inférieur et qui est fractionnée en plusieurs doigts élastiques (24) ayant chacun un épaulement (26), dirigé vers le haut, d'accrochage sur l'embout inférieur (12), et
- des moyens démontables (42) d'interdiction de rapprochement mutuel des doigts.

2. Squelette selon la revendication 1, caractérisé en ce que la partie terminale de la broche, au-delà de l'épaulement dirigé vers le haut, a une forme évasée.

3. Squelette selon la revendication 1 ou 2, caractérisé en ce que la broche (16) est en acier inoxydable ou Inconel et est fixée au tube guide (14), en alliage à base de zirconium, par un sertissage circulaire du tube guide (14) dans une première gorge (29) de la broche.

4. Squelette selon la revendication 1, 2, 3, caractérisé en ce que lesdits moyens démontables sont constitués par un jonc de verrouillage (42) logé dans une troisième gorge de la broche et dont les extrémités s'insèrent dans les fentes séparant les doigts (24).

5. Squelette selon l'une quelconque des revendications 1 à 4, caractérisé en ce que la partie haute de la broche (16) comporte une partie saillante (45) dirigée vers le haut et créant un volume annulaire mort (47) de réception de débris.

6. Squelette selon la revendication 3, caractérisé en ce que la broche comporte une seconde gorge (48) de sertissage d'une cartouche tubulaire (50) d'amortissement hydraulique montée à frottement doux dans le tube guide (14).

7. Squelette selon l'une quelconque des revendication précédentes, caractérisé en ce que les doigts élastiques (24) ont une épaisseur décroissante du haut vers le bas.

8. Squelette selon l'une quelconque des revendications précédentes, caractérisé en ce que la liaison entre les tubes guides (14) et l'embout supérieur (10) est effectuée par des douilles (38) vissées et retenues par déformation d'une jupe mince des douilles.

9. Squelette selon l'une quelconque des revendications 1 à 7 , caractérisé en ce que la partie supérieure de chaque tube guide est sertie dans un chambrage de l'embout supérieur (10) et bloquée par une douille (38) insérée à force.

## Patentansprüche

1. Skelett für Kernbrennelementkassetten mit durch Führungsrohre (14) verbundenen Kopfstücken (10, 12),
dadurch **gekennzeichnet**, daß die Verbindungsmittel umfassen:
- einen Zapfen (16), in dem eine Drosselöffnung (30) den Durchgang von Kühlmittel gebildet ist, der einen im Führungsrohr befestigten oberen Bereich und einen vorspringenden unteren Bereich umfaßt, der eine nach unten gerichtete Schulter (28) zum Abstützen am unteren Kopfstück aufweist, einen im unteren Kopfstück gebildeten Durchgang durchquert und in mehrere elastische Finger (24) unterteilt ist, die jeweils eine nach oben gerichtete Schulter (26) zum Einhaken am unteren Kopfstück (12) besitzen, und
- abnehmbare Mittel (42) zum Verhindern des gegenseitigen Annäherns der Finger.

2. Skelett nach Anspruch 1,
dadurch gekennzeichnet, daß
der Endbereich des Zapfens jenseits der nach oben gerichteten Schulter eine sich verjüngende Form hat.

3. Skelett nach Anspruch 1 oder 2,
dadurch gekennzeichnet, daß
der Zapfen (16) aus nichtrostendem Stahl oder Inconel besteht und am Führungsrohr (14) aus einer Legierung auf Zirkoniumgrundlage durch eine kreisförmige Bördelung des Führungsrohrs (14) in einer ersten Nut (29) des Zapfens befestigt ist.

4. Skelett nach Anspruch 1, 2 oder 3,
dadurch gekennzeichnet, daß
die abnehmbaren Mittel aus einem Verschlußring (42) bestehen, der in einer dritten Nut des Zapfens untergebracht ist, und dessen Enden in die die Finger (24) trennenden Schlitze (24) eingreifen.

5. Skelett nach einem der Ansprüche 1 bis 4,
dadurch gekennzeichnet, daß
der obere Bereich des Zapfens (16) einen nach oben gerichteten vorspringenden Bereich (45) umfaßt, der einen ringförmigen Totraum (47) zur Aufnahme von Rückständen bildet.

6. Skelett nach Anspruch 3,
dadurch gekennzeichnet, daß
der Zapfen eine zweite Nut (48) aufweist zum Anbördeln einer rohrförmigen Hülse (50) für die hydraulische Dämpfung, die mit leichter Reibung im Führungsrohr (14) montiert ist.

7. Skelett nach einem der vorhergehenden Ansprüche,
dadurch gekennzeichnet, daß
die elastischen Finger (24) eine von oben nach unten abnehmende Dicke haben.

8. Skelett nach einem der vorhergehenden Ansprüche,
dadurch gekennzeichnet, daß
die Verbindung zwischen den Führungsrohren (14) und dem oberen Kopfstück (10) durch verschraubte Hülsen (38) hergestellt wird, die durch Verformung einer dünnen Schürze der Hülsen gehalten werden.

9. Skelett nach einem der Ansprüche 1 bis 7,
dadurch gekennzeichnet, daß
der obere Bereich eines jeden Führungsrohrs in eine Ausnehmung des oberen Kopfstücks (10) eingebördelt und durch eine unter Kraftaufwand eingeführte Hülse (38) blockiert ist.

## Claims

1. A nuclear fuel assembly skeleton comprising two end pieces (10,12) connected by guide tubes (14), characterized in that the connecting means comprise :
- a peg (16) formed with a restricted coolant flow hole (30), having a top portion fixed in the guide tube and a projecting bottom portion which has a downwardly facing shoulder (28) for bearing on the lower end piece, which passes through a passage formed in the lower end piece, and which is divided into a plurality of resilient fingers (24) each having an upwardly facing shoulder (26) for catching on the lower end piece (12), and
- removable means for preventing movement of the fingers toward each other.

2. Skeleton according to claim 1, characterized in that the end portion of the peg, beyond the upwardly facing shoulder, tapers.

3. Skeleton according to claim 1 or 2, characterized in that the peg (16) is of stainless steel or Inconel, and is fixed to the guide tube (14), of zirconium-base alloy, by circularly crimping the guide tube (14) into a first groove (29) of the peg.

4. Skeleton according to claims 1, 2, 3, characterized in that the said removable means comprise a resilient open ring (42) inserted into a third groove in the peg and having end portions insertable in the slots between the fingers (24).

5. Skeleton according to any one of claims 1-4, characterized in that the top part of the peg (16) has an upwardly directed projection (45) defining an annular debris collection annular volume (47).

6. Skeleton according to claim 3, characterized in that the peg has a second groove (48) for crimping a hydraulic damping tubular cartridge (50) inserted and having a sliding fit in the guide tube (14).

7. Skeleton according to any one of the preceding claims, characterized in that the resilient fingers (24) have a thickness that decreases towards their lower ends.

8. Skeleton according to any one of the preceding claims, characterized in that the connection between the guide tubes (14) and the upper end piece (10) is formed by sockets (38) screwed and held by deformation of a thin skirt of the sockets.

9. Skeleton according to any one of claims 1-7, characterized in that the upper portion of each guide tube is crimped in a recess in the upper end piece (10) and locked therein by a force-fitted socket (38).
